Europäisches Patentamt

European Patent Office

Office européen des brevets

(19)

(11) Numéro de publication : **0 048 063**
**B1**

(12) FASCICULE DE BREVET EUROPÉEN

(45) Date de publication du fascicule du brevet :
07.05.86

(51) Int. Cl.⁴ : **H 01 B 1/14,** H 01 C 7/00,
C 03 C 3/14

(21) Numéro de dépôt : 81201005.6

(22) Date de dépôt : 10.09.81

(54) Encre sérigraphiable pour la réalisation de résistances et circuits électriques ainsi réalisés.

(30) Priorité : 15.09.80 FR 8019851

(43) Date de publication de la demande :
24.03.82 Bulletin 82/12

(45) Mention de la délivrance du brevet :
07.05.86 Bulletin 86/19

(84) Etats contractants désignés :
BE DE FR GB NL

(56) Documents cités :
EP-A- 0 008 437
FR-A- 2 075 627

(73) Titulaire : **Laboratoires d'Electronique et de Physique Appliquée L.E.P.**
**3, Avenue Descartes**
**F-94450 Limeil-Brévannes (FR)**
**FR**
**N.V. Philips' Gloeilampenfabrieken**
**Groenewoudseweg 1**
**NL-5621 BA Eindhoven (NL)**
**BE DE GB NL**

(72) Inventeur : **Ortega, Francis**
**Société Civile S.P.I.D. 209 rue de l'Université**
**F-75007 Paris (FR)**

(74) Mandataire : **Gendraud, Pierre et al**
**Société Civile S.P.I.D. 209, rue de l'Université**
**F-75007 Paris (FR)**

## Description

L'invention concerne une encre sérigraphiable pour la réalisation de résistances, à cuire sous atmosphère neutre, de façon telle que la valeur du CTR est de l'ordre $\pm\, 100 \times 10^{-6}\ °C^{-1}$ comprenant au moins un mélange d'hexaborure(s) métallique(s) et d'une fritte de verre(s) composée d'oxydes de bore ($B_2O_3$) et éventuellement de silice ($SiO_2$) et d'un élément alcalinoterreux tel que CaO, BaO ou SrO, comme liant permanent et un véhicule organique comportant un liant temporaire.

L'invention trouve son application dans le domaine de la microélectronique, notamment dans la réalisation de circuits électriques à couches épaisses, déposées par sérigraphie, et cuites sous atmosphère neutre, pour lesquels les diverses encres formulées doivent être compatibles, notamment avec une encre conductrice au cuivre selon le brevet FR-A-2 305 478.

Une encre résistive, comprenant un mélange de frittes de verre et d'hexaborure(s) métallique(s), est connue de la demande de brevet européen EP-A-8 437.

Ce document décrit une composition pour la réalisation de résistances sérigraphiées, comprenant un matériau conducteur formé d'hexaborures métalliques choisis parmi $LaB_6$, $YB_6$, $CaB_6$, $BaB_6$ et $SrB_6$ et un matériau isolant formé d'un verre incluant uniquement des oxydes non réductibles par les hexaborures.

Ces oxydes sont cependant choisis parmi ceux qui présentent un CTR (coefficient de variation de la résistance en fonction de la température) faible ou acceptable. Ces oxydes sont choisis parmi : CaO, BaO, $B_2O_3$, $SiO_2$, BeO, $La_2O_3$, SrO, HgO, $Y_2O_3$, $ScO_3$ $HfO_2$, $ZrO_2$, $Al_2O_3$, $LiO_2$, $TiO_2$, $CeO_2$, $ThO_2$

De plus, quelques autres oxydes, choisis comme non réductibles par les hexaborures peuvent être ajoutés au verre de base en faible quantité (inférieure à 2 %) tels que : $Cr_2O_3$, $Na_2O_3$, ZnO, $K_2O$, CdO, PbO et $Bi_2O_3$

Mais par la méthode décrite par le document cité, le CTR reste en valeur absolue très élevé. Dans les exemples proposés le CTR atteint des valeurs aussi grandes que $+\ 400$ ou $-\ 4\,000 \cdot 10^{-6}\ °C^{-1}$.

Or pour l'application envisagée à la réalisation de résistances de fortes valeurs pour circuits intégrés il est impératif d'abaisser la valeur du CTR dans les limites de $\pm\, 100 \cdot 10^{-6}\ °C^{-1}$.

C'est pourquoi la présente invention vise à résoudre ce problème en proposant une encre sérigraphiable telle que définie dans le préambule remarquable en ce que ce verre est modifié par une proportion molaire supérieure à 0 % et inférieure à 5 % d'oxydes de métaux choisis parmi le groupe constitué par le vanadium, le molybdène, le niobium, le tungstène, le tantale, le manganèse et le fer.

De cette manière, le comportement à la cuisson de la phase vitreuse est modifié dans une mesure telle que le CTR d'une couche épaisse dont la résistance par carré R/□ est aussi élevée que 100 k$\Omega$, puisse être de l'ordre de $\pm\, 100 \times 10^{-6}\ °C^{-1}$.

Les hexaborures peuvent être introduits de façon avantageuse sous la forme d'un mélange d'hexaborures de métaux divalents et de métaux au moins trivalents ou bien sous la forme d'une solution solide d'hexaborures de métaux divalents et de métaux au moins trivalents.

Selon la réalisation de l'invention, pour des couches présentant une résistance comprise entre 1 k$\Omega$ et 100 k$\Omega$, le verre est un borate ou un silico-borate de calcium modifié par la présence d'oxydes de métaux choisis parmi ledit groupe en des proportions molaires suivantes :

| | |
|---|---|
| CaO (provenant de $CoCo_3$) supérieure à | 30 % |
| $B_2O_3$ | 60-65 % |
| modificateur(s) | 1-5 % |

La description qui va suivre en regard des dessins annexés donnés à titre non limitatif permettra de mieux comprendre comment l'invention se réalise.

La figure 1 montre deux courbes qui traduisent les variations de la résistance et de son coefficient de variation en fonction de la température (CTR) respectivement pour une résistance dans laquelle le verre est un borate de calcium, modifié par la présence d'oxyde de vanadium, en fonction du pourcentage molaire de vanadium.

La figure 2 montre deux courbes similaires qui traduisent les variations de la résistance et du CTR respectivement pour une résistance utilisant le même verre, mais modifié cette fois par la présence d'oxyde de tungstène, en fonction du pourcentage molaire du tungstène.

La figure 3 montre deux courbes similaires qui traduisent les variations de la résistance et du CTR respectivement pour une résistance utilisant un verre de borate de baryum, modifié par la présence d'oxyde de niobium, en fonction du pourcentage molaire de niobium.

La figure 4 montre deux courbes similaires qui traduisent les variations de la résistance et du CTR respectivement pour une résistance utilisant un verre de borate de calcium, modifié par la présence d'oxyde de tantale, en fonction du pourcentage molaire du tantale.

Le mélange de départ utilisé comporte essentiellement un mélange de fritte(s) de verre et d'hexaborure(s) métallique(s). Le verre est composé d'oxydes de bore ($B_2O_3$) et éventuellement de silice ($SiO_2$), et d'un élément alcalino-terreux, par exemple CaO, BaO ou SrO modifié par des proportions molaires supérieures à 0 % et inférieures à 5 % d'oxydes de métaux choisis dans le groupe formé par le vanadium, le molybdène, le niobium, le tungstène, le tantale, le manganèse et le fer.

2

Le verre est obtenu par double fusion, entre 1 300 °C et 1 400 °C selon les techniques verrières habituelles, puis soumis à une trempe rapide, afin d'obtenir après broyage, par exemple dans un broyeur à boulets, une fritte de verre dont les grains ont des dimensions proches de 5 μm.

L'hexaborure métallique se présente également sous la forme d'une poudre, dont les grains sont très durs et de dimension voisine ou inférieure au micron. Des métaux convenables peuvent être des métaux divalents, tels que le calcium, strontium, baryum ou europium, à caractère semi-conducteur, ou des métaux au moins trivalents, tels que le lanthane, le samarium, le thorium, à caractère métallique ; une solution solide mixte d'hexaborures métalliques est également envisageable.

D'une façon préférentielle, la Demanderesse réalise la synthèse des hexaborures et notamment des solutions solides mixtes d'hexaborures par réduction par le bore, sous vide, des oxydes des métaux envisagés. Un mélange de poudres d'oxyde(s) métallique(s) et de bore est mis sous la forme de pastilles, par suite d'une forte pression, puis chauffé quelques heures, à une température supérieure à 1 300 °C, sous vide. Ce processus conduit alors à l'obtention de céramiques, à grains fins, qui sont ensuite réduites à l'état de poudres, par simple broyage.

Le signe du CTR d'un matériau dépend de son caractère semi-conducteur ou métallique. Les métaux présentent un CTR positif, ce qui signifie que la résistivité croît lorsque la température s'élève, et qui est expliqué en ce que le réseau d'ions, dans lequel se meuvent les électrons libres participants à la conduction, gêne d'autant plus ce mouvement qu'il est soumis à agitation. Par contre, les semiconducteurs présentent une CTR négatif, ce qui signifie que la résistivité décroît lorsque la température s'élève, et qui est expliqué en ce que l'énergie d'agitation thermique tend à modifier la répartition des populations d'électrons de la bande de valence, vers la bande de conduction.

Il est possible également de mélanger un hexaborure de métal divalent et un hexaborure de métal au moins trivalent, de manière à abaisser le CTR de ce mélange à une valeur aussi faible que possible, ou de réaliser par le procédé ci-dessus décrit une solution solide mixte d'hexaborures, lorsque les rayons ioniques des ions métalliques sont compatibles.

Les deux poudres de fritte de verre(s) et d'hexaborure(s) sont alors mélangées, en proportion variable selon la résistance désirée, dans une fourchette aussi large que le rapport 10/1 et 1/10. Les mélanges présentant une grande quantité de verre offrent généralement une grande résistivité et un CTR négatif apporté par le verre, alors que ceux présentant une faible quantité de verre offrent une faible résistivité et un CTR voisin de celui du matériau conducteur.

Un premier moyen destiné à diminuer le CTR, ainsi que décrit dans le brevet français 2 397 704, consiste à broyer l'ensemble pendant quelques heures, par exemple dans un broyeur planétaire, de manière à en modifier la granulométrie. Au contact des particules très dures d'hexaborures, celles du verre voient leurs dimensions diminuer de 5 microns, jusqu'à moins de 0,01 micron. Parallèlement, après réalisation d'une résistance sérigraphiée, le CTR sera diminué d'au moins un facteur dix.

Un second moyen consiste à modifier le comportement à la cuisson de la phase vitreuse et fait l'objet de la mesure décrite ci-après.

On réalise alors une encre sérigraphiable, par dispersion du mélange dans un véhicule organique (ou liant), dont la composition peut être aussi variée que le nombre de fabricants d'encre, et quoique souvent occulte, ressort principalement du mélange d'un liant temporaire (résine ou polymère : méthacrylates, méthylméthacrylates, éthylcellulose), d'un mélange de solvant, gélifiant, plastifiant, combinant des points d'ébullition pas trop élevés à de faibles tensions de vapeur à l'ambiante (terpinéol, acétate de butylcarbitol, ...) et d'un agent tensio-actif et/ou d'un lubrifiant (oxydes d'éthylène, lécithine de soja, acide stéarique, palmitique, ...). Des additifs nombreux peuvent être rajoutés tels que des agents stabilisants, des liquides très volatils destinés à une évaporation rapide après impression... A titre d'exemple, on pourra avec profit, utiliser une solution d'éthylcellulose, dans du terpinéol. La proportion de véhicule varie dans une large mesure, et peut atteindre 80 % en volume par rapport à l'encre.

Le véhicule organique a essentiellement une fonction rhéologique, afin d'obtenir l'impression à travers un écran de sérigraphie et la reproduction du motif y contenu, et une fonction de liant, afin de coller les matériaux solides sur le substrat, typiquement en alumine ; enfin, le véhicule doit disparaître lors de la cuisson, sans charbonner ni réagir de façon nuisible avec la fraction solide des encres.

Après sérigraphie au travers d'un écran, typiquement en toile acier inox recouverte d'émulsion, puis séchage rapide et cuisson sous atmosphère d'azote dans un four multizone de manière à obtenir un profil de température à palier entre 800 °C et 1 000 °C, pendant environ dix minutes, on obtient une couche sérigraphiée faisant office de résistance, et dont le procédé d'obtention est compatible avec ceux de la famille développée précédemment, des conducteurs au cuivre (GB-A-2 305 478) et des diélectriques au zinc et cobalt (GB-A-2 451 899).

Les résistances obtenues selon le procédé sus-décrit doivent présenter d'une part une résistance convenable, d'autre part une stabilité thermique et hygroscopique. La résistance n'est pas un facteur décisif, car il est possible de l'ajuster, par exemple par découpe laser, a posteriori. Par contre, la stabilité est un facteur déterminant, notamment celle des propriétés électriques des couches. La stabilité hygroscopique est assurée par un choix convenable des constituants ; ainsi, des oxydes tels que l'oxyde de baryum sont déconseillés. Par contre, l'addition de silice $SiO_2$ dans des proportions qui restent compatibles avec la viscosité du verre, peut avoir des conséquences favorables sans modifier les caractéristiques électriques.

L'effort du concepteur d'encre doit porter en priorité sur le CTR. Ce coefficient est d'autant plus négatif que la résistance est élevée, due à une part importante de verre. Et il est généralement établi que des résistances présentant un CTR en dehors de la plage $\pm\,150 \times 10^{-6}\,°C^{-1}$ sont inacceptables pour la microélectronique.

La Demanderesse a donc été conduite à rajouter à la formulation des encres des modificateurs présentant un effet suffisant en faibles quantités.

La modification des propriétés électriques des hexaborures métalliques, par exemple dans une répartition pondérée des hexaborures de métaux divalents et trivalents, n'influence que faiblement les propriétés électriques de la couche finie, lorsque la proportion de verre est par trop importante.

Les modèles de conduction électrique dans des systèmes biphasés verre (isolant)/métal (conducteur), sont relativement complexes et ressortent d'au moins trois conceptions :

transport électrique par des filaments conducteurs reflétant la notion de seuil de percolation dans un milieu hétérogène aléatoire ;

transport électrique par conduction électronique (effet tunnel, saut d'électrons dit « hopping », ...) autorisant le passage d'électrons dans de faibles épaisseurs de milieu continu isolant, entre des grains conducteurs ;

transport électrique par une phase conductrice intergranulaire résultant d'une réaction entre les grains conducteurs originaux et la phase vitreuse ;

ou d'une combinaison de celles-ci.

De la première conception, il revient l'idée bien connue d'abaisser la granulométrie des particules de conducteurs, ce qui permet de diminuer le seuil de percolation.

De la deuxième conception, il revient l'idée soit de modifier les caractéristiques électriques du milieu continu, par introduction de composants divers dans le verre (notamment des métaux de transition), soit de diminuer l'épaisseur du milieu continu en abaissant la granulométrie des particules de verre (tel que décrit dans le brevet FR-A-2 397 704).

Enfin, la troisième conception résulte d'une constatation non évidente, en ce que la cuisson de certaines compositions de verre contenant certains oxydes de métaux de transition amène une inversion du signe du CTR de la couche résistive obtenue (faiblement positif), par rapport au CTR des éléments originaux de départ (négatif), inversion qui ne peut se concevoir qu'en supposant une réaction entre les deux phases, conduisant à la présence entre les grains conducteurs d'hexaborure(s) métallique(s), d'une phase conductrice intergranulaire.

Ces oxydes de métaux de transition, à effet surprenant, ont été étudiés par la Demanderesse, dans une longue série d'expériences dont les plus significatives sont décrites ci-après.

### Exemple 1

Une série de résistances, contenant des proportions croissantes d'oxyde de vanadium fut réalisée de la façon suivante.

Un verre de borate de calcium, modifié par la présence d'oxyde de vanadium fut réalisé à partir d'oxyde de bore ($B_2O_3$), d'oxyde de calcium (CaO provenant de $CaCO_3$) et d'oxyde de vanadium, (ajouté dans cet exemple précis sous la forme initiale de $V_2O_5$) par double fusion suivie d'une trempe rapide et broyage aux boulets, avec des proportions molaires suivantes : $B_2O_3$ [65−x/2], CaO [35−x/2], $V_2O_5$ (x), x pouvant prendre des valeurs comprises entre 0 et 5.

L'hexaborure choisi est une solution solide mixte $La_{0.2}Sr_{0.8}B_6$, et l'encre sérigraphiable résistive est obtenue par mélange de ces deux poudres, dans des proportions volumiques respectives de 70 % pour le verre, et 30 % pour l'hexaborure.

Le véhicule organique est une solution d'éthyl cellulose dans du terpinéol, dans une proportion volumique de 60 % du mélange total.

L'encre résistive ainsi préparée fut sérigraphiée à travers un écran en toile acier inox, recouvert d'émulsion, avec une ouverture standard de 325 Mesh (nombre d'ouvertures par pouce linéaire), séchée à 125 °C pendant dix minutes, puis cuite sous atmosphère neutre (moins de 10 ppm d'oxygène) dans un four multizone.

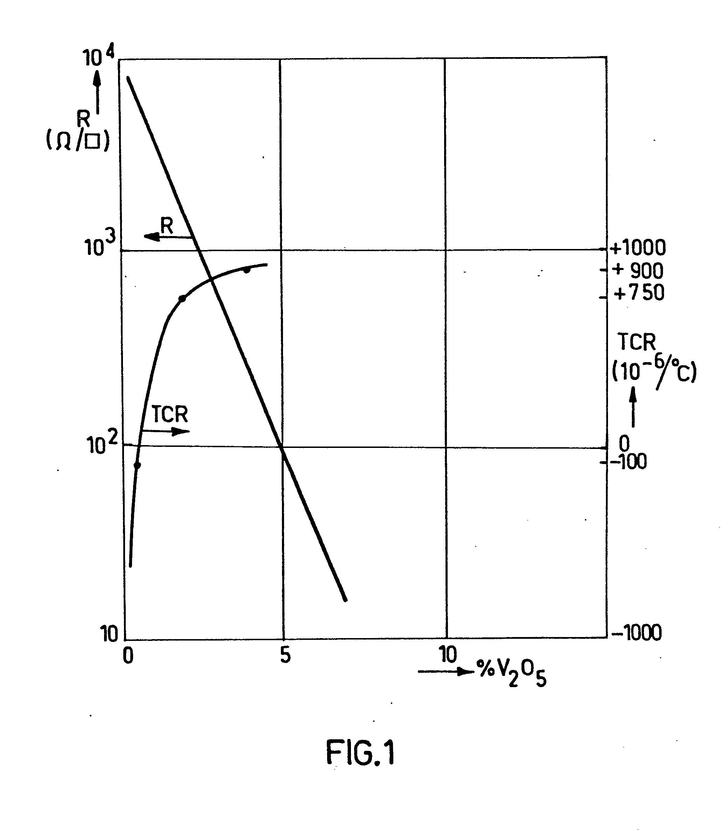

La figure 1 montre la variation de la résistance R ($\Omega/\square$) et du CTR d'une couche donnée, en fonction de la proportion d'oxyde de vanadium. A teneur nulle en oxyde de vanadium, la couche présente une résistance très élevée et un CTR très négatif.

### Exemple 2

De la même manière, il fut préparée une encre sérigraphiable résistive, à partir d'un verre de borate de calcium, modifié par un oxyde de tungstène, dans les proportions molaires suivantes : CaO (35-y/2), $B_2O_3$ (65-y/2) et $WO_3$ (y), et d'un hexaborure de strontium $SrB_6$.

Les proportions respectives volumiques des deux phases dans ledit mélange de départ étaient de 70 % pour le verre et de 30 % pour l'hexaborure.

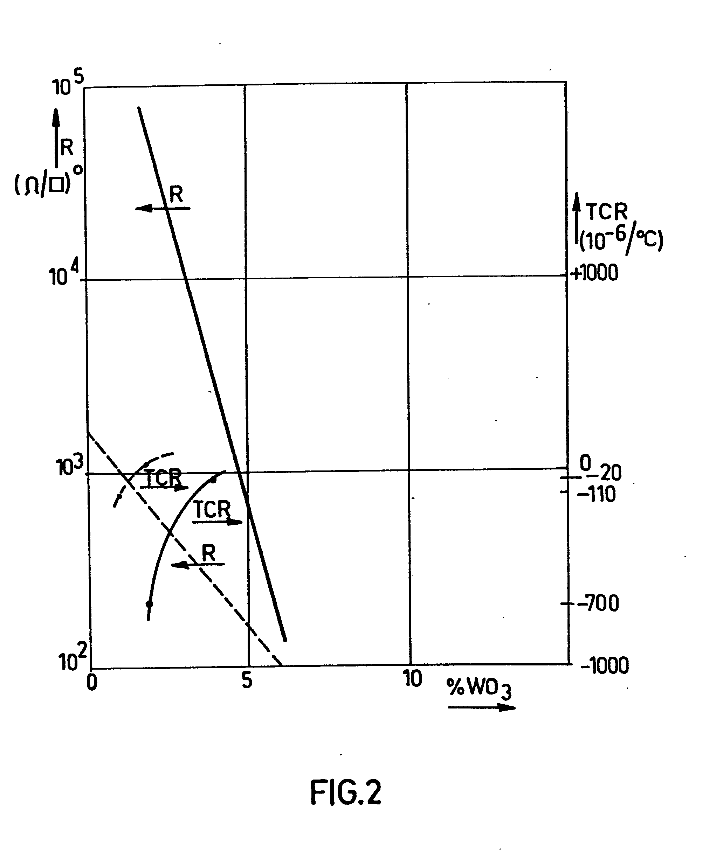

Après dispersion dans un véhicule organique commun, sérigraphie, séchage et cuisson, des mesures électriques sur les couches obtenues ont permis le tracé de la figure 2, qui représente les variations de la résistance R ($\Omega/\square$) et du CTR en fonction du pourcentage de l'oxyde de tungstène.

Il est à noter ici que l'hexaborure de strontium est semi-conducteur et que le CTR de ce constituant est très négatif (voir tableau-III du brevet 2 397 704). L'obtention, au moyen d'un verre tel que le Ca.B.W, d'une couche dont le CTR est nul ou légèrement positif ne s'explique que par réaction de l'hexaborure avec la phase vitreuse modifiée, et la production d'une phase dont les propriétés électriques sont différentes de celles du matériau de départ.

## Exemple 3

Une encre sérigraphiable fut préparée à partir d'un verre au borate de baryum, modifié par de l'oxyde de niobium, dans les proportions molaires suivantes : BaO [35−z/2], B$_2$O$_3$ [65−z/2] et Nb$_2$O$_5$ (z), et d'un hexaborure de strontium.

Les proportions respectives des deux phases dans le mélange de départ étaient de 70 % pour le verre et de 30 % pour l'hexaborure.

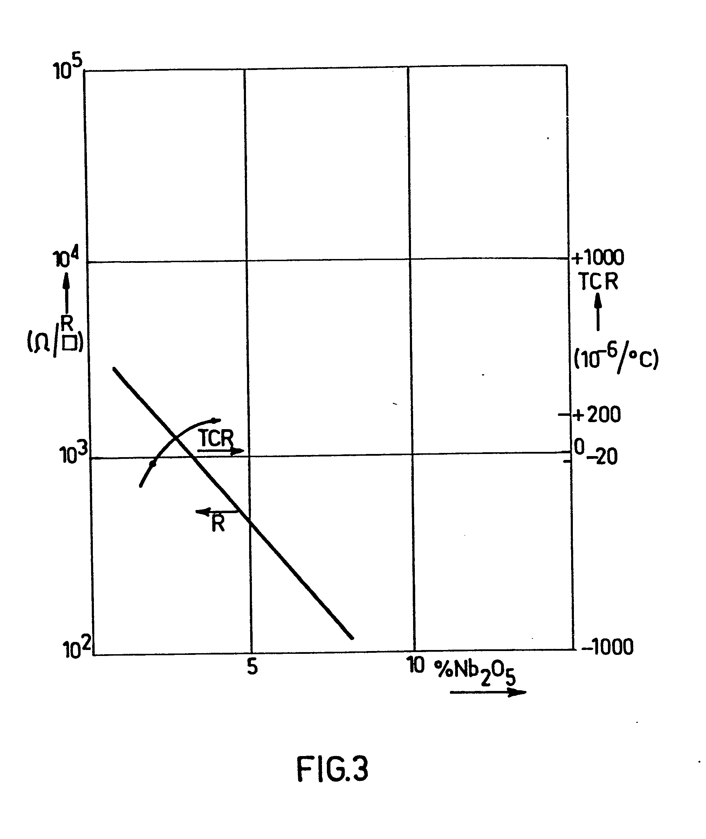

Après dispersion dans un véhicule organique commun, sérigraphie, séchage et cuisson sous azote, des mesures électriques furent effectuées et reportées sur la figure 3, qui représente les variations de la résistance R ($\Omega/\square$) et du CTR en fonction du pourcentage d'oxyde de niobium.

## Exemple 4

Une encre sérigraphiable similaire à celle de l'exemple 2 fut préparée à partir d'un verre au borate de calcium modifié par de l'oxyde de tungstène (WO$_3$), le matériau conducteur étant cette fois-ci un hexaborure de lanthane et de strontium, en une solution solide mixte La$_{0,2}$Sr$_{0,8}$B$_6$.

Les proportions volumiques respectives des deux phases dans ledit mélange de départ étaient identiques à celles de l'exemple 2.

Après dispersion dans un véhicule organique commun, sérigraphie, séchage et cuisson, on releva les mesures électriques qui sont représentées pour comparaison sur la figure 2 (courbes en pointillés).

Il est à noter ici que, malgré le rôle important de la phase vitreuse modifiée dans la valeur finale de la résistance, le matériau conducteur de départ (hexaborure) joue également un rôle non négligeable, en abaissant, dans cet exemple, la valeur de la résistance d'un facteur 10, par rapport au mélange de l'exemple 2.

## Exemple 5

Une encre sérigraphiable similaire fut préparée à partir d'un verre au borate de calcium, modifié par un oxyde de tantale, dans les proportions molaires suivantes : CaO [35 − (t/2)], B$_2$O$_3$ [65 − (t/2)] et Ta$_2$O$_5$ (t) et d'hexaborures de strontium.

Les proportions volumiques respectives des deux phases dans ledit mélange étaient identiques à celles des exemples précédents.

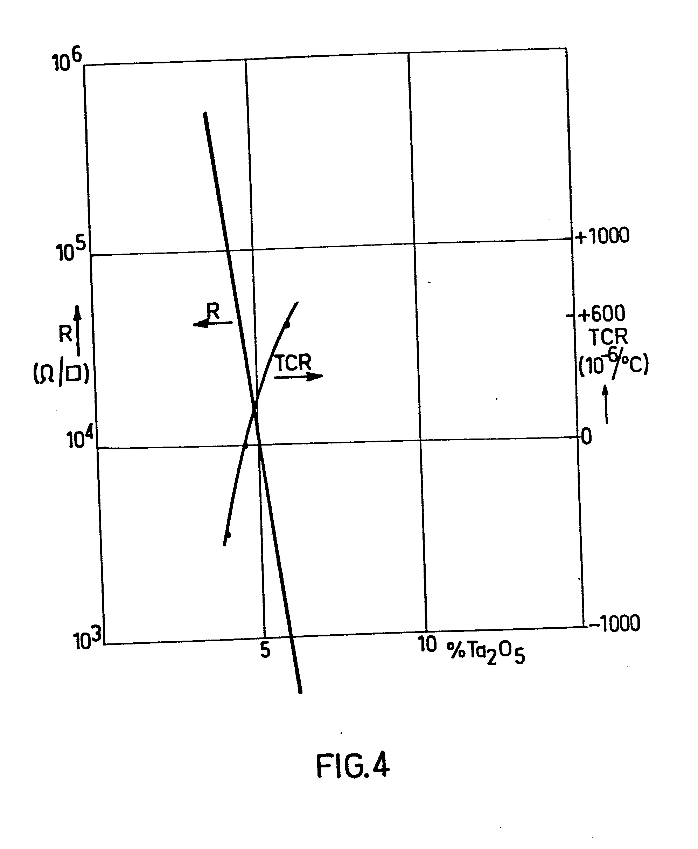

Après dispersion dans un véhicule commun, sérigraphie, séchage et cuisson sous azote, des mesures électriques furent effectuées et reportées sur la figure 4, qui représente les variations de la résistance R ($\Omega/\square$) et du CTR en fonction du pourcentage d'oxyde de tantale.

**Revendications**

1. Encre sérigraphiable pour la réalisation de résistances à cuire sous atmosphère neutre de façon telle que la valeur du CTR est de l'ordre $\pm$ 100 $\times$ 10$^{-6}$ °C$^{-1}$ comprenant au moins un mélange d'hexaborure(s) métallique(s), d'une fritte de verre(s) composée d'oxydes de bore (B$_2$O$_3$) et éventuellement de silice (SiO$_2$) et d'un élément alcalino-terreux tel que CaO, BaO ou SrO, comme liant permanent et d'un véhicule organique comportant un liant temporaire, caractérisée en ce que la fritte de verre est modifiée par une proportion molaire supérieure à 0 % et inférieure à 5 % d'oxydes de métaux choisis parmi le groupe constitué par le vanadium, le molybdène, le niobium, le tungstène, le tantale, le manganèse et le fer.

2. Encre sérigraphiable selon la revendication 1, caractérisée en ce qu'elle comprend un mélange d'hexaborures de métaux divalents et de métaux au moins trivalents.

3. Encre sérigraphiable selon la revendication 1, caractérisée en ce qu'elle comprend une solution solide d'hexaborures de métaux divalents et de métaux au moins trivalents.

4. Encre sérigraphiable selon les revendications 2 ou 3, caractérisée en ce que le métal divalent est le strontium.

5. Encre sérigraphiable selon la revendication 4, caractérisée en ce que le métal au moins trivalent est le lanthane.

6. Encre sérigraphiable selon la revendication 1, caractérisée par les proportions molaires suivantes :

CaO (provenant de CaCO$_3$) supérieure à 30 %
B$_2$O$_3$ 60-65 %
modificateur(s) 1-5

et éventuellement de la silice (SiO$_2$)

7. Circuits électriques, comportant au moins une couche sérigraphiée obtenue par cuisson d'une encre, selon l'une des revendications 1 à 6, dans une atmosphère neutre, à des températures comprises entre 800 °C et 1 000 °C.

## Claims

1. A screen-printing ink for producing resistors by firing in a neutral atmosphere, in such a way that the value of the TCR is in the order of approximately $100 \times 10^{-6}$ °C$^{-1}$, which ink comprises at least a mixture of one or more metalhexaborides, of a glass frit formed from boron oxides (B$_2$O$_3$) and possibly silica (SiO$_2$) and an alkaline-earth element such as CaO, BaO or SrO, as a permanent binder, and of an organic vehicle comprising a temporary binder, characterized in that the glass frit is modified by a molar proportion larger than 0 % and smaller than 5 % of metal oxides selected from the group formed by vanadium, molybdenum, niobium, tungsten, tantalum, manganese and iron.

2. A screen-printing ink as claimed in Claim 1, characterized in that it comprises a mixture of bivalent metal hexaborides and hexaborides of metals which are at least trivalent.

3. A screen-printing ink as claimed in Claim 1, characterized in that it comprises a solid solution of bivalent metal hexaborides and hexaborides of metals which are at least trivalent.

4. A screen-printing ink as claimed in Claim 2 or 3, characterized in that the bivalent metal is strontium.

5. A screen-printing ink as claimed in Claim 4, characterized in that the at least trivalent metal is lanthanum.

6. A screen-printing ink as claimed in Claim 1, characterized by the following molar ratios :

CaO (coming from CaCO$_3$) larger than 30 %
B$_2$O$_3$ 60-65 %
modifier(s) 1-5 %,

and possibly silica (SiO$_2$).

7. Electric circuits comprising at least a screen-printed layer obtained by firing an ink, as claimed in any one of the Claims 1 to 6, in a neutral atmosphere at temperatures in the range from 800 °C to 1 000 °C.

## Patentansprüche

1. Siebdrucktinte zur Herstellung von Widerständen, die in neutraler Atmosphäre derart ausgebrennt werden müssen, dass der Wert des TCR in der Grössenordnung von $\pm 100 \times 10^{-6}$ °C$^{-1}$ liegt, wobei diese Tinte mindestens ein Gemisch aus Metalhexaborid(en) und einer Glasfritte beziehungsweise Glasfritten aus Boroxyde (B$_2$O$_3$) und gegebenenfalls Siliziumoxyd (SiO$_2$) und einem Erdalkali-element, wie CaO, BaO oder SrO, als Dauerbindemittel und einen organischen Träger mit einem vorübergehenden Bindemittel aufweist, dadurch gekennzeichnet, dass die Glassfritte durch ein Molverhältnis grösser als 0 % und kleiner als 5 % der Metaloxyde, die aus der Gruppe gewählt sind, die aus Vanadium, Molybdän, Niobium, Wolfram, Tantal, Mangan und Eisen besteht.

2. Siebdrucktinte nach Anspruch 1, dadurch gekennzeichnet, dass diese ein Gemisch aus bivalenten Metalhexaboriden und mindestens trivalenten Metalhexaboriden aufweist.

3. Siebdrucktinte nach Anspruch 1, dadurch gekennzeichnet, dass diese eine feste Lösung bivalenter Metalhexaboride und mindestens trivalenter Metalhexaboride aufweist.

4. Siebdrucktinte nach Anspruch 2 oder 3, dadurch gekennzeichnet, dass das bivalente Metal Strontium ist.

5. Siebdrucktinte nach Anspruch 4, dadurch gekennzeichnet, dass das mindestens trivalente Metal Lanthan ist.

6, Siebdrucktinte nach Anspruch 1, gekennzeichnet durch die folgenden Molverhältnisse :

CaO (herrührend von CaCO$_3$) grösser als 30 %
B$_2$O$_3$ : 60-65 %
Modifikatoren : 1-5 %

und gegebenenfalls Siliziumoxyd (SiO$_2$).

7. Elektrische Schaltungsanordnungen mit mindestens einer Siebdruckschicht, die durch Ausbrennen einer Tinte nach einen der Ansprüche 1-6 in einer neutralen Atmosphäre bei einer Temperatur zwischen 800 und 1 000 °C erhalten worden ist.

FIG.1

FIG.2

FIG.3

FIG.4